# EUROPÄISCHE PATENTANMELDUNG

(11) **EP 1 104 732 A2**
(43) Veröffentlichungstag der Anmeldung: **06.06.2001**
(21) Anmeldenummer: 00121535.9
(22) Anmeldetag: 30.09.2000
(51) Int. Cl.: B60T 8/00

(54) **Verfahren zur Verhinderung des Umkippens eines Fahrzeugs**

(30) Priorität: 02.12.1999 DE 19958221
(71) Anmelder: WABCO GmbH & CO. OHG, 30453 Hannover (DE)
(72) Erfinder: Dieckmann, Thomas, Dr., 30982 Pattensen (DE)
(74) Vertreter: Schrödter, Manfred

(57) **Zusammenfassung**

Es wird ein ein Verfahren zur Verhinderung des Umkippens eines Fahrzeugs, insbesondere eines Nutzfahrzeugs, vorgeschlagen. Hierzu werden mit Sensoren (1, 2) die Luftfederbalgdrücke und gleichzeitig mit einem Querbeschleunigungssensor (3) oder über Raddrehzahl-Sensoren (10, 11) die Querbeschleunigung des Fahrzeugs erfaßt. Aus dem so für eine bestimmte Beladung ermittelten Wertepaar wird eine Grenzbeschleunigung hochgerechnet, bei welcher der Luftfederbalgdruck des kurveninneren Rades auf Atmosphärendruck abgefallen ist. Falls während der Fahrt die aktuelle Querbeschleunigung des Fahrzeugs etwa 75 % der Grenzbeschleunigung erreichen sollte, wird die Geschwindigkeit des Fahrzeugs durch eine Fahrerwarnung, eine automatische Motordrosselung oder eine automatische Einbremsung verringert.

## Beschreibung

Die Erfindung bezieht sich auf ein Verfahren zur Verhinderung des Umkippens eines Fahrzeugs gemäß dem Oberbegriff des Patentanspruchs 1.

Nutzfahrzeuge wie LKWs oder Busse, insbesondere solche mit hohem Schwerpunkt, können in zu schnell gefahrenen Kurven auf griffiger Straße durchaus zum Umkippen neigen. Derartige Unfälle können durch übliche Fahrdynamikregelungen (FDR) nicht erfaßt und verhindert werden, da in diesem Fall bis kurz vor dem Abheben die Haftungsgrenzen der Räder nicht überschritten werden. Fahrdynamikregelungen erzeugen in bekannter Weise durch Einzelradbremsungen ein stabilisierendes Moment. Es besteht ein Bedarf, ein drohendes Umkippen eines Fahrzeuges frühzeitig zu erkennen und den Fahrer entsprechend zu warnen.

Ein gattungsgemäßes Verfahren ist beispielsweise aus der DE 19 602 879 Cl bekannt. In dieser Schrift wird ein Verfahren zum Erfassen der Gefahr des Umkippens eines Fahrzeuges beschrieben, bei dem eine Abnahme der Kippstabilität des Fahrzeuges während einer Kurvenfahrt anhand eines Einsetzens eines ABS-Regel-Eingriffes ermittelt wird. Hierzu wird an den Rädern des Fahrzeugs ein geringer Bremseingriff künstlich eingeleitet. Das bekannte Verfahren hat den Vorteil, daß zusätzliche, aufwendige Sensoren entfallen.

Aus der EP 0 798 615 A1 ist weiter ein Verfahren zur Verbesserung der Fahrstabilität (FDR) bekannt, welches mit einer Vielzahl von direkt oder indirekt ermittelten Fahrzeugdaten arbeitet, welche mittels eines komplizierten Algorithmus kombiniert werden. Unter anderem wird hier auch die Druckdifferenz zwischen rechten und linken Luftbälgen gemessen. Sensoren sind dabei ausdrücklich nur im Zugfahrzeug angebracht. Das Verfahren dient dazu, die Wahrscheinlichkeit des Umkippens des Anhängers zu vermindern.

Es ist weiter auch denkbar, in Abhängigkeit von der Fahrzeug-Beladung eine maximale Querbeschleunigung in Kurven zuzulassen, die mit steigender Beladung sinkt. Die Beladung kann dabei durch das Beschleunigungsverhalten des Fahrzeugs abgeschätzt werden. Nachteilig an dieser Methode ist, daß die genaue Schwerpunkthöhe und die Verteilung der Beladung nicht berücksichtigt wird. Hierdurch lassen sich die möglichen Kurvengeschwindigkeiten nicht voll ausnutzen.

Der Erfindung liegt die Aufgabe zugrunde, ein Verfahren zur Verhinderung des Umkippens eines Fahrzeugs anzugeben, das mit einfachen Mitteln auskommt und auch eine ungleichmäßige Beladung berücksichtigt. Dabei soll die jeweils mögliche Fahrzeuggeschwindigkeit in Kurven beider Richtungen voll ausgenutzt werden können. Das Verfahren soll insbesondere anwendbar sein für LKWs, Busse, Anhänger und Schienenfahrzeuge.

Die obengenannte Aufgabe wird durch die im Patentanspruch 1 angegebene Erfindung gelöst. Die Unteransprüche enthalten zweckmäßige Weiterbildungen der Erfindung.

Die Erfindung wird im folgenden anhand einer Zeichnung näher erläutert.

Diese zeigt in
- Fig. 1: eine schematische Darstellung eines Nutzfahrzeuges (Sattelschlepper), und in der
- Fig. 2: ein Diagramm, aus welchem die Luftfederbalgdrücke und deren Änderungen bei einer Kurvenfahrt (Linkskurve) hervorgehen.

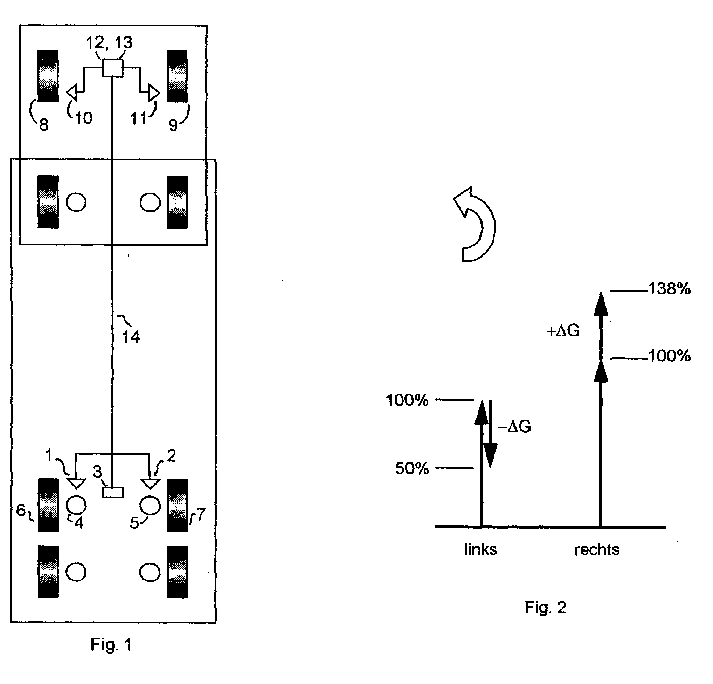

In der Fig. 1 ist in schematischer Darstellung in Draufsicht ein Sattelschlepper dargestellt. Dieser weist vier Achsen auf. Die Vorderachse besitzt Räder (8, 9), welche mit Drehzahlsensoren (10, 11) versehen sind. Diese sind an eine ABS-Elektronik (12) oder ein elektronisches Bremssystem (EBS (13)) angeschlossen.

Die vordere Hinterachse des Anhängers weist Reifen (6, 7) auf, welche ebenfalls mit Drehzahlsensoren (nicht dargestellt) ausgerüstet sind. Die Achse ist mit Luftfederbälgen (4, 5) gefedert. Der in den Bälgen herrschende Luftdruck wird mit Sensoren (1, 2) abgefühlt. Weiter ist an der Achse ein Querbeschleunigungs-Sensor (3) angebracht. Die drei genannten Sensoren (1, 2, 3) sind über eine Leitung (14) mit der Elektronik (12, 13) verbunden.

Die übrigen Achsen des Anhängers sind ebenfalls mit Luftfederbälgen, die jedoch nicht drucksensiert sind, ausgerüstet. Ebenso sind im allgemeinen sämtliche Räder des Fahrzeugs mit Drehzahlsensoren versehen (nicht dargestellt).

Im folgenden wird die Wirkungsweise des erfindungsgemäßen Verfahrens im Zusammenhang mit der Fig. 2 näher erläutert.

Für das erfindungsgemäße Verfahren wird die seitliche Stabilität des Fahrzeugs bzw. des Anhängers zunächst bei mit normaler Geschwindigkeit befahrenen Kurven untersucht. Hierzu wird für beide Kurvenrichtungen ein Wertepaar festgestellt, wobei zu einer vorliegenden Querbeschleunigung des Fahrzeugs die prozentuale Verminderung des Luftdrucks im kurveninneren Luftfederbalg bestimmt wird.

Wie in der Fig. 2 dargestellt, vermindert sich dabei in einer bestimmten Linkskurve der Luftdruck im linken Luftfederbalg (4) einer Achse von 100 % auf 50 %. Gleichzeitig erhöht sich der Luftdruck im rechten Luftfederbalg (5) dieser Achse von 100 % auf 138 %. Diesen Luftdruck-Veränderungen entspricht eine Gewichtsverlagerung von ΔG vom linken auf den rechten Luftfederbalg.

Die Querbeschleunigung der Kurve möge 1 m/s² betragen. Diese kann mit dem Sensor (3) oder über die Raddrehzahlen bestimmt werden.

Wie aus der Fig. 2 erkenntlich, ist der Luftdruck bei Geradeausfahrt (100-Prozent-Werte) für den linken Luftfederbalg geringer als für den rechten Luftfederbalg. Dies ist ein Anzeichen dafür, daß das Fahrzeug seitenweise ungleichmäßig beladen ist, wobei hier die rechte Seite schwerer als die linke Seite ist.

Aus dem für die hier vorliegende Linkskurve vorliegenden Wertepaar von 50 % Druckverminderung bei einer Querbeschleunigung von 1 m/s² wird nun durch eine Programm-Ergänzung in den Elektroniken (12, 13) ein entsprechender Beschleunigungs-Grenzwert für eine Lastverminderung auf 0 % im linken Luftfederbalg hochgerechnet. Diese würde in diesem Fall eine Lastverminderung auf 0 % bei einer Grenzbeschleunigung von 2 m/s² ergeben. Dabei wird eine lineare Abhängigkeit von Lastverminderung und Querbeschleunigung vorausgesetzt.

Die o. g. "Grenzbeschleunigung" wird für jede Kurvenrichtung, also für Links- und Rechtskurven, getrennt berechnet und eingelernt. Hierdurch wird auch eine ungleichmäßige seitenweise Beladung des Fahrzeugs berücksichtigt, wodurch die möglichen Kurvengeschwindigkeiten voll ausgenützt werden können.

Während des Betriebs des Fahrzeugs werden ständig die beiden Grenzbeschleunigungen neu berechnet und in die Elektronik eingelernt. Hierdurch werden zwischenzeitliche Beladungsänderungen des Fahrzeugs, welche sich auf die Kippneigung auswirken, automatisch erfaßt.

Während der Fahrt des Fahrzeugs wird nun mittels des Querbeschleunigungssensors (3) oder durch Auswertung der von den Raddrehzahlsensoren (10, 11) ermittelten Werte (Drehzahldifferenz rechts - links) die Querbeschleunigung des Fahrzeugs gemessen. Sobald diese etwa 75 % der oben ermittelten Grenzbeschleunigung erreicht hat, wird entweder dem Fahrer eien Warnung gegeben, oder die Fahrzeuggeschwindigkeit durch eine automatische Motordrosselung oder durch eine automatische Einbremsung verringert.

Die genannte automatische Einbremsung kann dabei, wie aus der Fahrdynamikregelung (FDR) bekannt, selektiv an einzelnen Rädern des Fahrzeugs erfolgen. Insbesondere kann an den Rädern einer Achse unterschiedlich stark gebremst werden, um beispielsweise mit den kurvenäußeren Rädern stark zu verzögern, während die kurveninneren Räder nur gering gebremst werden. Dadurch kann die Bremskraftanforderung den Radlasten angepaßt werden, was Bremsweg und Seitenführung verbessert.

Das erfindungsgemäße Verfahren kann auch bei Fahrzeugen ohne Luftfederung angewendet werden. In diesem Fall werden anstatt der Balgdrücke die Einfederungen oder die Radlasten an beiden Seiten mindestens einer Achse des Fahrzeugs erfaßt. Um verarbeitbare Meßwerte zu erhalten, ist es zweckmäßig, diese in bekannter Weise mit eiem Tiefpaß zu glätten.

## Patentansprüche

1. Verfahren zur Verhinderung des Umkippens eines Fahrzeugs, insbesondere eines Nutzfahrzeugs, das mit einer oder mehreren Achsen ausgerüstet ist, und das ein Antiblockiersystem (ABS) (12) und/oder ein elektronisches Bremssystem (EBS) (13) aufweist,
dadurch gekennzeichnet, daß
mit Sensoren (1,2) die Luftfederbalgdrücke, die Einfederungen, oder die Radlasten an den beiden Seiten mindestens einer Achse erfaßt werden,
mit einem Querbeschleunigungs-Sensor (3) oder über Raddrehzahl- Sensoren (10,11) die Querbeschleunigung des Fahrzeugs erfaßt wird,
aus den Meßwerten der Sensoren (1,2) und der gleichzeitig ermittelten Querbeschleunigung für jede Kurvenrichtung getrennt eine Grenzbeschleunigung ermittelt und eingelernt wird, die als Indikator für die jeweilige Kippgefahr des Fahrzeugs dient,
ermittelt wird, ob während der Fahrt die Querbeschleunigung einen Grenzwert erreicht,
die Geschwindigkeit des Fahrzeugs in diesem Fall durch eine Fahrerwarnung, eine automatische MotorDrosselung, und/oder eine automatische Einbremsung verringert wird.

2. Verfahren nach Patentanspruch 1, dadurch gekennzeichnet, daß der Grenzwert zwischen 70 % und 80 % der Grenzbeschleunigung liegt.

3. Verfahren nach Patentanspruch 1 bis 2, dadurch gekennzeichnet, daß die automatische Einbremsung selektiv an einzelnen Rädern des Fahrzeugs erfolgt.
